Europäisches Patentamt

European Patent Office

Office européen des brevets

(19)

(11) Veröffentlichungsnummer : **0 123 821**
**B1**

(12) # EUROPÄISCHE PATENTSCHRIFT

(45) Veröffentlichungstag der Patentschrift :
19.10.88

(51) Int. Cl.⁴ : **B 23 D 15/06**

(21) Anmeldenummer : 84102111.6

(22) Anmeldetag : 29.02.84

(54) Vorrichtung zum Schneiden von Werkstücken aus einem erwärmten Rohmaterialstrang.

(30) Priorität : 08.03.83 AT 798/83

(43) Veröffentlichungstag der Anmeldung :
07.11.84 Patentblatt 84/45

(45) Bekanntmachung des Hinweises auf die Patenterteilung : 19.10.88 Patentblatt 88/42

(84) Benannte Vertragsstaaten :
AT DE FR GB IT SE

(56) Entgegenhaltungen :
AT-B- 351 337
US-A- 2 767 789
US-A- 3 122 042
US-A- 3 440 910
US-A- 4 022 088

(73) Patentinhaber : EUMUCO Aktiengesellschaft für Maschinenbau
Josefstrasse 10
D-5090 Leverkusen 1 (DE)

(72) Erfinder : Krösbacher, Peter
Tschaffinis 9a
A-6166 Fulpmes (AT)
Erfinder : Wetzinger, Johann
Kapfers 13
A-6165 Telfes (AT)

(74) Vertreter : Schönwald, Karl et al
Patentanwälte Schönwald-Fues- von Kreisler-Keller-Selting-Werner Deichmannhaus
D-5000 Köln 1 (DE)

Jouve, 18, rue St-Denis, 75001 Paris, France

EP 0 123 821 B1

**Beschreibung**

Die Erfindung betrifft eine Einrichtung zur Herstellung von Spaltstücken aus einem zu einer Spaltvorrichtung taktweise vorgeschobenen, erwärmten Rohmaterialstrang, die einen Grundkörper mit einem schräg zum Materialstrang ausgerichteten Untermesser und ein an einem vertikal bewegbaren Schneidstempel befestigtes Obermesser aufweist, und an die eine die Spaltstücke aufnehmende und zu einer Umformvorrichtung zuführende Transportvorrichtung anschließt, wobei die Vorschubrichtung des Materialstranges und die Zuführrichtung zur Umformvorrichtung in einer nicht veränderbaren Relation stehen und wobei die beiden Messer der Spaltvorrichtung im Winkel zur Vorschubrichtung verdrehbar angeordnet sind.

In der AT-B-351.337 wird ein Verfahren zur Herstellung von erwärmten Spaltstücken beschrieben, wobei eine gleichmäßige Erhitzung des stangenförmigen Ausgangsmaterials sowie ein kontinuierlicher Arbeitsablauf durch Verschweißung flacher Materialstangen zu einem Flachmaterialstrang erreicht wird. Der bis zur Schmiedetemperatur erhitzte Strang tritt dann in die Spaltvorrichtung ein, in der die schräg zur Vorschubrichtung angeordneten Messer, die grob den Umrißformen der herzustellenden Produkte entsprechenden Spaltstücke abtrennen, die dann der Gesenkschmiede zugeführt werden. Die Erwärmung des Stranges erfolgt dabei an sich im wesentlichen parallel zur Spaltrichtung, also schräg zu zum Strang erstreckenden Abschnitten. Dabei ergeben sich Probleme durch ungleiche Längendehnungen, die zu einer Krümmung des Stranges und zur Verschiebung der Lage der zueinander parallelen Schnittlinien führen. Gründe für die ungleichen Längendehnungen liegen in unterschiedlichen Materialeigenschaften der aneinandergeschweißten Materialstangen, in deren gegebenenfalls unterschiedlichen Breiten oder Dicken, in nicht auszuschließenden Unregelmäßigkeiten der Aufheizung usw. Die entlang geschwungener Schnittlinien abgetrennten Spaltstücke müssen für die nachfolgende Handhabung durch Greifer außerhalb der groben Umrißform Greifansätze aufweisen. Die Verschiebung der Lage der Schnittlinien führt nun auf Grund der schrägen Ausrichtung dazu, daß an Stellen, an denen die Breite des Spaltstückes ohnedies gering ist, beispielsweise im Übergangsbereich zu den Greifansätzen, eine Breitenverringerung sich einstellt. Die Greifansätze können daher bei der späteren Handhabung durch die Greifer abbrechen, bzw. in extremen Fällen bereits bei der Spaltung abgeschnitten werden.

In der US-A-3 440 910 (H. Scribner) ist eine Universalschere zum Abtrennen von Teilstücken mit unterschiedlicher geometrischer Gestaltung von einem Materialstreifen beschrieben, bei der sich ein Obermesser auf und nieder zu einem Untermesser bewegt. Beide Messerträger sind drehbar gelagert und einstellbar für das Abtrennen des Materials zu einer vorbestimmten Gestaltung. Ferner ist eine Verdrehung der beiden Messer zur Bildung von Schnittlinien in unterschiedlichen Richtungen bei Blechschneidpressen aus der DE-OS 27 52 912 bekannt. Dort ist einer Revolver-Schneidpresse eine Trennschere vorgesetzt, die zur Ausführung von Schnitten in eine durchlaufende Blechtafel eingesetzt wird.

Aufgabe der Erfindung ist es, eine Einrichtung zur Herstellung von Spaltstücken aus einem zu einer Spaltvorrichtung taktweise vorgeschobenen erwärmten Rohmaterialstrang zu schaffen, bei der der Arbeitsablauf trotz Veränderung der Schnittlinienlage führungsfrei erfolgt und die Anpassung an die geänderten Verhältnisse in einfacher Weise erzielt werden kann. Die Erfindung zeichnet sich bei der Einrichtung der anfangs genannten Art dadurch aus, daß die Transportvorrichtung ein in Abhängigkeit von der Winkelverstellung der Messer verdrehbares Aufnahmeelement für die Spaltstücke aufweist, das jedes der Spaltstücke in eine kongruente Zuführlage zur Umformvorrichtung verdreht.

Da die Vorschubrichtung des Stranges und die Zuführrichtung der Spaltstücke zur Umformvorrichtung in einer gleichbleibenden Relation stehen, ermöglicht die Verdrehung des Aufnahmeelementes der Übergabevorrichtung in der Aufnahmestellung eine Anpassung an die Winkeländerung, wobei die Ausgangsstellung des Aufnahmeelementes, also jene Stellung, aus der die Spaltstücke in die Umformvorrichtung bewegt werden, unabhängig vom eingestellten Winkel der Messer, beibehalten wird. Es werden die abgeschnittenen Spaltstücke in jene Lage gebracht, die sie zur Bearbeitung in der nachfolgenden Umformmaschine, insbesondere einer Gesenkschmiede, benötigen.

Vorteilhaft ist die gesamte Spaltvorrichtung um eine vertikale Achse drehbar, die durch die Längsachse des Materialstranges verläuft. Die Spaltvorrichtung kann auf einen Rundtisch um einen Winkel drehbar sein, der zwischen 45° und 150° beträgt.

Zweckmäßig sind im Rundtisch kreisbogenförmige Schlitze vorgesehen, die von Befestigungselementen hintergriffen werden. Die Art der Befestigung kann den Verhältnissen angepaßt gewählt werden, ebenso sind für die Drehbewegung der gesamten Spaltvorrichtung verschiedene Möglichkeiten denkbar: Sie kann beispielsweise hydraulisch oder mittels eines Motors, gegebenenfalls auch von Hand erfolgen.

Um nun bei jeder Veränderung des Winkels der Spaltvorrichtung zur Vorschubrichtung eine exakte Anlage des Aufnahmeelementes zu erzielen, ist dieses bevorzugt an einem Tragarm um eine vertikale Achse drehbar gelagert, wobei der Tragarm zwischen der Aufnahmestellung des Aufnahmeelementes und einer Übergabestellung horizontal bewegbar ist, in der jedes Spaltstück sich im Aufnahmeelement in der Zuführlage zur Umformvorrichtung befindet. Der Tragarm selbst ist in einer weiteren bevorzugten Ausführung um eine zur Zuführrichtung der Spaltstücke zur Umformvorrichtung senkrechte, vertikale Achse, vorzugsweise mittels hydraulischer Einrichtungen zwischen der Aufnahmestellung und der Übergabestellung verschwenkbar. Es wäre jedoch auch seine horizontale Verschiebung denkbar.

Je nach Art des Arbeitsablaufes bieten sich für die Anordnung und Funktionsweise des Aufnahmeelementes mehrere Möglichkeiten an. So sieht beispielsweise für nur gelegentliche geringfügige Winkelverstellungen der beiden Messer zum Ausgleich von Abweichungen des Materialstranges aus der Vorschubrichtung bzw. zur Änderung der Spaltstücklänge eine bevorzugte Ausführung der erfindungsgemäßen Einrichtung vor, daß das drehbare Aufnahmeelement in der Übergabestellung durch Federbeaufschlagung in einer Mittellage gehalten ist, in der es mit einem sich in der Zuführrichtung zur Umformvorrichtung erstreckenden Transportteil fluchtet. Wird das auf diese Weise selbständig in die Übergabeposition rückstellende Aufnahmeelement durch Anlage an mit der Verdrehung der Messer sich ändernden Anschlägen der Spaltvorrichtung in die Aufnahmestellung gebracht, etwa durch die Verschwenkung des Tragarmes, so kann es sich aus der neutralen Mittellage je nach dem Ausmaß der Winkelverstellung unter Spannung einer Rückstellfeder verdrehen, die es während der Rückführung in die Übergabestellung wieder in die Mittellage zurückbewegt. Dabei bleibt es selbstverständlich gleichgültig, ob sich das Aufnahmeelement bei der Einnahme der Aufnahmestellung durch Anlage an die Spaltvorrichtung nach links oder nach rechts verdreht. Das Aufnahmeelement wird dabei dann auch in der Aufnahmestellung in der neutralen Mittellage sein, wenn ein häufig gegebener Schnittwinkel der Messer eingestellt ist. Die Längserstreckung des Aufnahmeelementes verläuft jedoch in jedem Fall in der Aufnahmestellung in einem Winkel zur Vorschubrichtung.

Werden mit der Spaltvorrichtung durch alternierende Winkelverstellungen der Messer dreieckige bzw. trapezförmige Spaltstücke erzeugt, wobei die Längserstreckung der Spaltstücke nicht parallel bzw. annähernd parallel zu den Schnittlinien, sondern zu der Vorschubrichtung liegt, so ist in einer hiezu besonders geeigneten Ausführung der Einrichtung vorgesehen, daß das Aufnahmeelement in der Aufnahmestellung in einer Mittellage gehalten ist, in der es mit der Vorschubrichtung fluchtet, und zwischen der Aufnahme und der Übergabe jedes Spaltstückes alternierend nach links oder rechts verdrehbar ist, wobei die beiden Endstellungen um 180° differieren.

Nach Übergabe der Spaltstücke auf den zur Umformvorrichtung erstreckenden Transportteil liegen daher die Spaltstücke in geordneter kongruenter Anordnung, obwohl sie in jeweils um 180° versetzter Lage in das Aufnahmeelement eintreten.

Wenn die Vorschubrichtung des Materialstranges und die Zuführrichtung der dreieckigen oder trapezförmigen Spaltstücke zur Umformvorrichtung parallel verlaufen, so ist in einer hiezu besonders geeigneten Variante vorgesehen, daß das Aufnahmeelement zwischen der Aufnahme und der Übergabe jedes zweiten Spaltstückes um 180° verdrehbar ist. Dies bedeutet, daß jeweils ein Spaltstück in der abgeschnittenen Lage zur Umformvorrichtung transportiert wird, und jedes zweite um 180° verdreht anfallende Spaltstück während der Überführung in den anschließenden Transportteil in die übereinstimmende Lage verdreht wird.

Die abgeteilten Spaltstücke sollen bei ihrer Zuführung zur Umformvorrichtung einen möglichst kurzen Zuführweg zurücklegen, in dem der Anteil an unkontrollierbaren Wegstrecken, innerhalb derer sie beispielsweise durch Schwerkraft bewegt werden, möglichst klein ist. Es ist daher in einer weiteren Ausführung vorgesehen, daß als Aufnahmeelement eine Aufnahmelade ausgebildet ist, und das Untermesser der Spaltvorrichtung schnittkantenseitig eine Ausnehmung aufweist, in die die Aufnahmelade der Transportvorrichtung in der Aufnahmestellung horizontal eingeschoben ist. In diesem Fall ist bevorzugt vorgesehen, daß die Transportvorrichtung eine sich in Zuführrichtung erstreckende Zuführrinne aufweist, wobei die Aufnahmelade in der Übergabestellung mit der Zuführrinne fluchtet.

Es ist jedoch auch ebenso möglich, daß als Aufnahmeelement eine Greifzange Verwendung findet, die die Spaltstücke an ein den Weitertransport bewirkendes Förderband in der kongruenten Lage übergibt.

Nachstehend wird nun die Erfindung anhand der Figuren der beiliegenden Zeichnungen näher beschrieben, ohne darauf beschränkt zu sein.

Es zeigen :

Fig.1 eine Seitenansicht einer erfindungsgemäßen Einrichtung,

Fig.2 einen Schnitt nach der Linie II-II der Fig.1, wobei das Aufnahmeelement in der Übergabestellung gezeigt ist,

Fig.3 denselben Schnitt mit dem Aufnahmeelement in Aufnahmestellung,

Fig.4 einen Schnitt nach der Linie IV-IV in Fig.3 durch die Spaltvorrichtung,

Fig.5 eine schematische Draufsicht auf eine zweite Ausführung, und

Fig.6 eine schematische Draufsicht auf eine dritte Ausführung der erfindungsgemäßen Einrichtung.

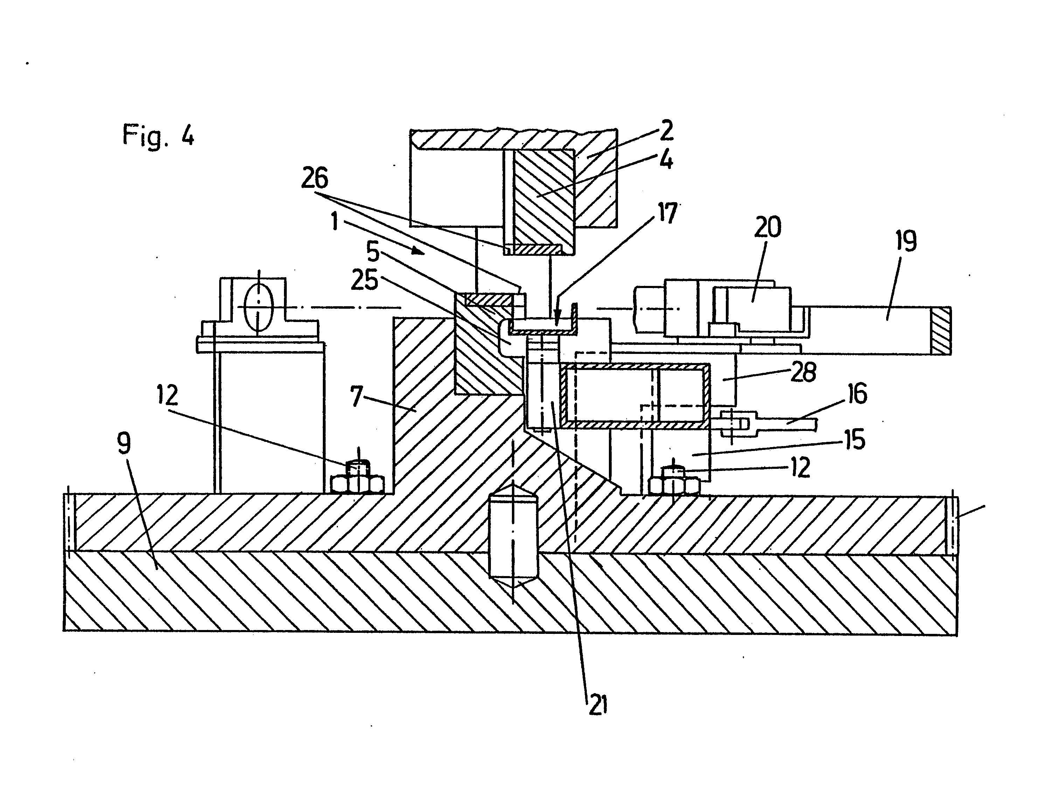

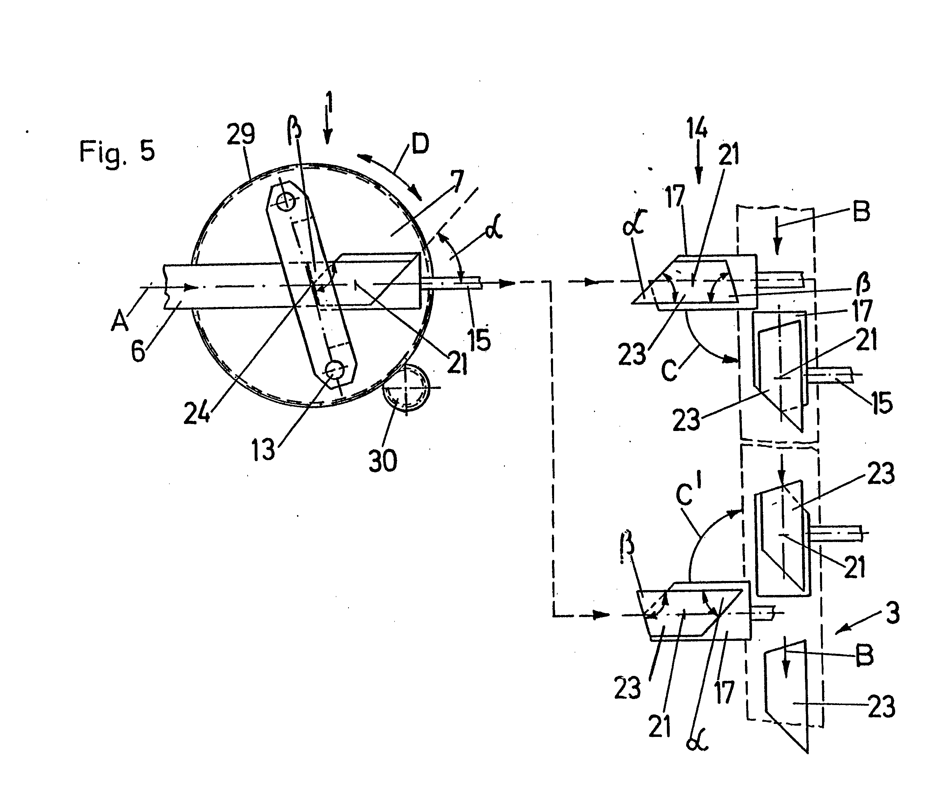

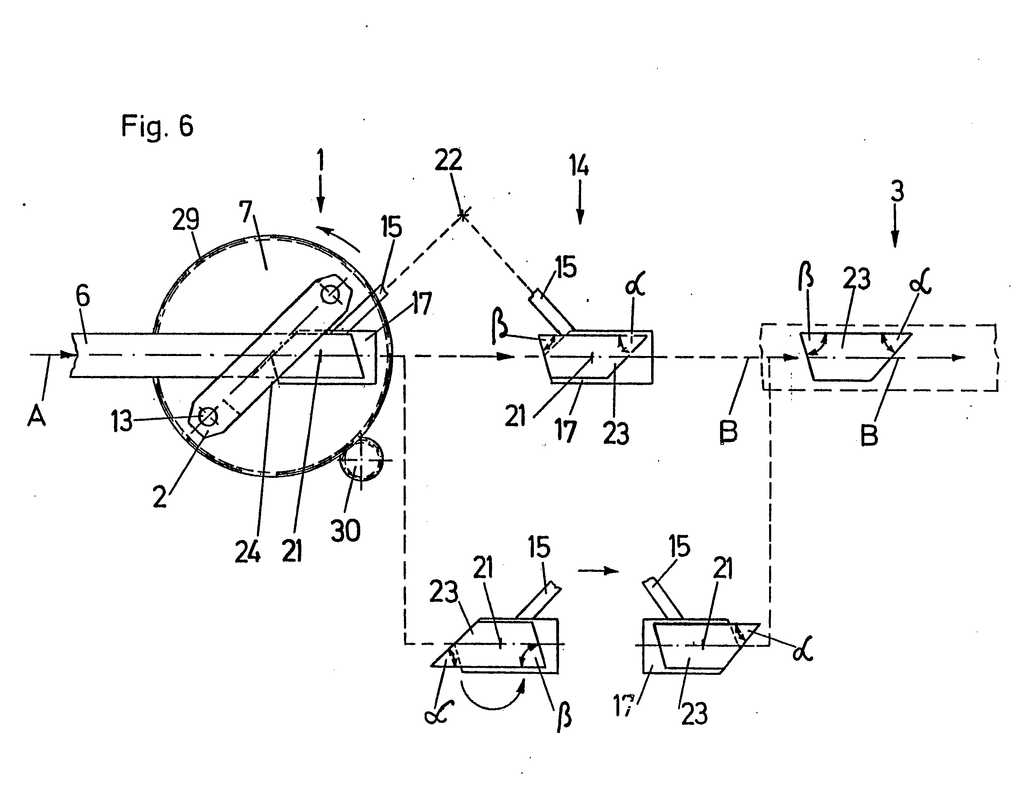

Die erfindungsgemäße Einrichtung weist eine Spaltvorrichtung 1 auf, die auf einem Rundtisch 9 um die Achse 24 drehbar angeordnet ist. Die Spaltvorrichtung 1 besteht aus einem Grundkörper 7, an dem ein Untermesser 5 fixiert ist, und aus einem vertikal auf im Grundkörper 7 angeordneten Führungssäulen 13 beweglichen Schneidstempel 2, auf dem ein Obermesser 4 befestigt ist. Die Bewegung des Schneidstempels 2 erfolgt mittels einer nicht näher bezeichneten hydraulischen Einrichtung in Abhängigkeit vom horizontalen, taktweisen Vorschub eines Flachmaterialstranges 6 in Vorschubrichtung A. Die Achse 24 verläuft dabei durch die Längsachse des Flachmaterialstranges 6. Als Achslager des Grundkörpers 7 dient ein Zapfen 28, der in den Rundtisch 9 eingesetzt ist. In den Rundtisch 9 sind weiters beispielsweise kreisbogenförmige Schlitze 10 eingelassen, die von Führungselementen 12 hintergriffen sind, die in den Grundkörper 7 eingesetzt sind. Sie können im einfachsten Fall durch Maschinenschrauben mit Muttern gebildet sein, vorzugsweise können jedoch auch schnell lös- und fixierbare Befestigungselemente vorgesehen werden, beispielsweise hydraulische Spanneinrichtungen. Ein Antrieb für die Verdrehung der Spaltvorrichtung 1 besteht beispielsweise aus einem in eine Stirnverzahnung 29 des Grundkörpers 7 eingesetzten Getriebeteil 30 eines nicht gezeigten Motors (Fig. 5, 6), er kann aber auch hydraulisch erfolgen. Das Untermesser 5 ist in eine seitlich offene Ausnehmung 8 des Grundkörpers 7 eingesetzt, und weist selbst ebenfalls an der Seite der Schnittkante 26 (Fig. 4) eine Ausnehmung 25 auf. Die Schnittkanten 26 der beiden Messer 4, 5 sind geschwungen, um Spaltstücke 23 vom Materialstrang 6 abzutrennen, die grob der Umrißform der daraus herzustellenden Produkte entsprechen. Derartige Produkte sind beispielsweise Schraubenschlüssel und andere Werkzeuge. Die Messer 4, 5 der Spaltvorrichtung 1 und damit deren durch die Führungssäulen 13 verlaufende Mittelebene sind in einem Winkel zur Vorschubrichtung A ausgerichtet, der für die Produktion von Schraubenschlüsseln beispielsweise 25° betragen kann. Dieser Winkel ist in diesem Fall abhängig von der Breite des zu verarbeitenden Materialstranges 6 und der Länge der herzustellenden Spaltstücke 23, die zusätzlich an den beiden Enden Greifansätze aufweisen müssen.

Der Materialstrang 6, der aus einzelnen vorher verschweißten Materialstangen besteht, wird unmittelbar vor der Einbringung in die Spaltvorrichtung auf Rotglut erhitzt, wozu insbesondere eine Induktionsheizung vorgesehen ist. Dies ermöglicht eine wesentlich gleichmäßigere Erwärmung des Stranges als bei einer Erhitzung der einzelnen Spaltstücke. Die Erhitzung erfolgt dabei in etwa parallel zur Spaltvorrichtung 1 verlaufenden schrägen Zonen, sodaß das abzuschneidende Strangende über die Breite gleichmäßig erhitzt ist. Die Erhitzung, unterschiedliche Materialeigenschaften und Breiten sowie Dicken der einzelnen verschweißten Stangen können zu einer Krümmung des Materialstranges 6 in seiner Ebene führen, sodaß eine seitliche Abweichung aus der Vorschubrichtung A auftritt. Hiedurch verändert sich der Schneidwinkel zur Vorschubrichtung A und somit auch die Lage der Schnittlinie der unveränderten Spaltvorrichtung 1. Die geschwungenen Schnittkanten bewirken nun bei einem seitlichen Ausweichen des Materialstranges 6 eine Veränderung des Abstandes der Schnittlinien zueinander, sodaß in den Bereichen geringen Abstandes, insbesondere in den Übergangsbereichen zu den unbedingt notwendigen Greifansätzen, eine deren Abbrechen ermöglichende Verjüngung bzw. im Extremfall deren vollständige Abtrennung erfolgen kann. Wird nun eine derartige seitliche Abweichung des Materialstranges 6, die zu einer unerwünschten Formveränderung der Spaltstücke 23 führt, festgestellt, so wird die Spaltvorrichtung 1 um einen bestimmten Winkelbetrag verdreht, sodaß auf diese Weise jederzeit der ursprünglich gewählte Winkel zur Vorschubrichtung A wieder hergestellt ist.

Im übrigen ermöglicht die Verdrehung der Spaltvorrichtung 1 auch die einfache Einstellung der Schräge beim Wechsel der Messer 4, 5, um beispielsweise Spaltstücke 23 für längere oder kürzere Schraubenschlüssel, gegebenenfalls in Verbindung mit einer Änderung der Vorschublänge pro Arbeitstakt, zu erzeugen.

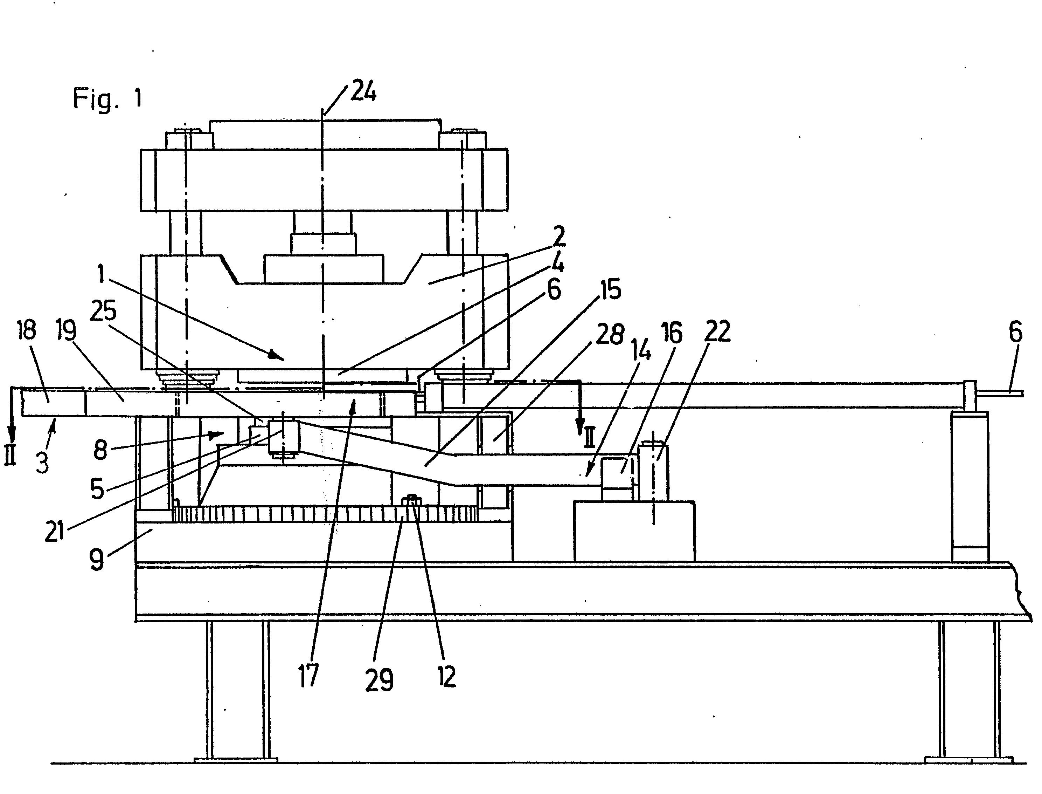

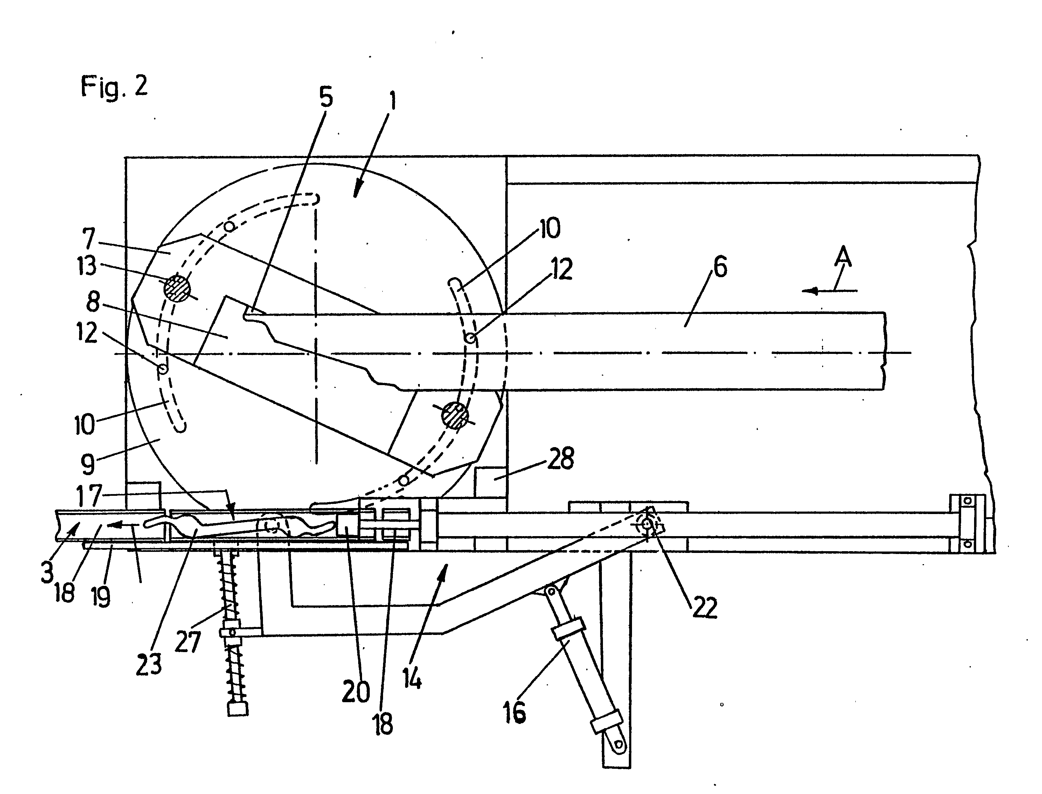

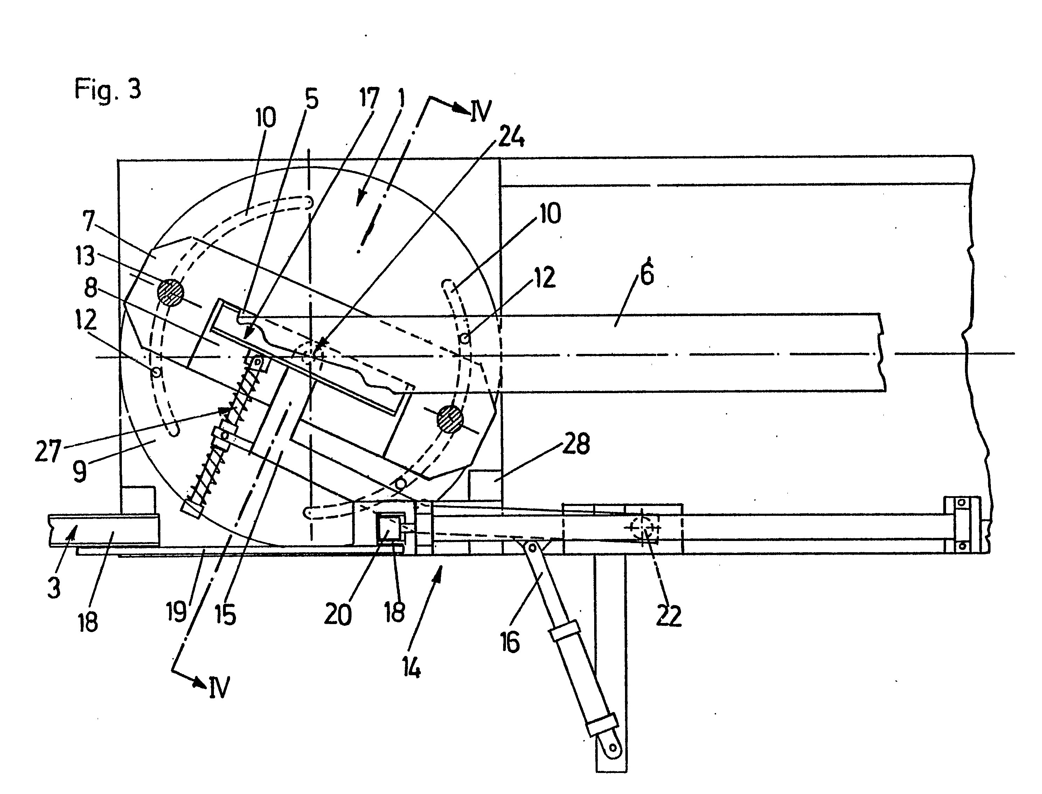

An die Spaltvorrichtung 1 ist eine Transportvorrichtung 14 angeschlossen, die die abgeschnittenen Spaltstücke 23 aufnimmt und zur Umformvorrichtung, insbesondere zu einer Gesenkschmiede in der zur Vorschubrichtung A etwa parallelen Zuführrichtung B weiterbefördert. Die Transportvorrichtung 14 besteht zum einen aus einem auf einem Tragarm 15 angeordneten Aufnahmeelement 17 und zum anderen aus einem weiteren Transportteil 3. Wie in den Zeichnungsfiguren 1 bis 4 näher dargestellt, wird das Aufnahmeelement 17 insbesondere durch eine Aufnahmelade und der weitere Transportteil 3 durch eine Zuführrinne 18 gebildet, die von einem druckmittelbetriebenen Schieber 20 bestrichen wird. Der Tragarm 15 ist mehrfach abgewinkelt und am anderen Ende um eine vertikale Achse 22 mittels einer hydraulischen Einrichtung 16 verschwenkbar gelagert (Fig. 1-3). Dabei schließt das Aufnahmeelement 17 in der in Fig. 1 und 2 gezeigten Übergabestellung eine Lücke zwischen den beiden Teilen des weiteren Transportteiles 3, wobei als Begrenzung ein leistenförmiger Anschlag 19 vorgesehen ist. Aus dieser Übergabestellung ist das Aufnahmeelement 17 in die in Fig. 3 bzw. 4 gezeigte Aufnahmestellung verschwenkbar, in der es zum Teil in die bereits erwähnte Ausnehmung 25 des Untermessers 5 eingeschoben ist. Ein abgetrenntes Spaltstück 23 fällt daher in das Aufnahmeelement 17, das anschließend in die Übergabestellung gemäß Fig. 1, 2 bewegt wird, und wird von dort durch den Schieber 20 über den weiteren Transportteil 3 der Gesenkschmiede zugeführt.

Bei der in den Fig. 1-4 gezeigten Ausführung einer gelegentlichen Verstellung des Winkels der Spaltvorrichtung 1 wäre eine exakte Anlage des Aufnahmeelementes 17, vor allem bei seiner Ausführung als Aufnahmelade in der Ausnehmung 25 des Untermessers 5 nicht mehr gegeben. Das Aufnahmeelement 17 ist daher auf dem Tragarm 15 um eine vertikale Achse 21 drehbar, sodaß es sich der Winkeländerung anpassen kann. Die freie, ungewollte Verdrehung des Aufnahmeelementes wird dabei durch ein Federelement 27 verhindert, das durch beidseitige Beaufschlagung des Aufnahmeelementes 17 dieses in einer neutralen Mittellage hält bzw. es bei einer Verdrehung zur Anpassung an den geänderten Winkel der Spaltvorrichtung 1 zur Vorschubrichtung A wieder in die Mittellage zurückführt, in der es in der Übergabestellung mit dem Transportteil 3 fluchtet.

Der abgewinkelte Tragarm 15 ist in einen Teilbereich schräg nach unten geführt, sodaß er sich unterhalb des Schiebers 20 und seiner Betätigungsvorrichtung hindurch bewegen kann. Um den seitlichen Abstand zu verringern, kann beispielsweise die den vorderen Teil des Schiebers 20 tragende Stütze 28 etwa V-förmig ausgebildet sein.

In den Fig. 5 und 6 sind schematisch zwei weitere Ausführungen der erfindungsgemäßen Einrichtung in Draufsicht gezeigt, wobei die detaillierte Ausführung der einzelnen Bestandteile vorzugsweise der in den Fig. 1–4 gezeigten entspricht. Während dort die Verdrehung der Spaltvorrichtung 1 nur zum Ausgleich von Lageveränderungen des Materialstranges 6 bzw. zur Veränderung des Schnittwinkels für unterschiedlich lange Spaltstücke eingesetzt wird, so sind die Ausführungen nach den Fig. 5 und 6 zur Herstellung von dreieckigen oder trapezförmigen Spaltstücken geeignet, also solchen bei denen die Schnittlinien nicht parallel verlaufen. Die Spaltvorrichtung 1 muß hiezu nach jedem Schnitt in eine andere Position verdreht werden. In beiden Figuren sind jeweils zwei aufeinanderfolgende Arbeitsschritte dargestellt, bei denen Spaltstücke in nicht kongruenter Lage abgetrennt und anschließend in die kongruente Lage überführt werden.

Gemäß Fig. 5 wurde von dem erwärmten, in die Spaltvorrichtung 1 in der Vorschubrichtung A eingeführten Materialstrang 6 ein Spaltstück 23 abgetrennt, wobei die Schnittlinie im Winkel α zur Vorschubrichtung A verläuft, während der im vorangehenden Arbeitstakt erzeugte Schnitt den Winkel β zur Vorschubrichtung A einnimmt. Das abgetrennte Spaltstück 23, dessen Längserstreckung in der Vorschubrichtung liegt, und das wie beschrieben, vom Aufnahmeelement 17 in der Aufnahmestellung aufgenommen wurde, wird nun um 90° (Pfeil C) in die Zuführrichtung B verschwenkt. Hiezu wird das Aufnahmeelement um die Achse 21 auf dem Tragarm 15 verdreht. Der Tragarm 15 kann von der Aufnahmestellung in die Übergabestellung des Spaltstückes 23 an den weiteren Transportteil 3, wie ebenfalls bereits erwähnt, verschwenkt werden. In Fig. 5 ist hingegen eine zu diesem Zweck eine ebenso mögliche horizontale Verschiebung angedeutet. Nach der Abtrennung des Spaltstückes 23 wird während seiner Übergabe an den Transportteil 3 die Spaltvorrichtung 1 (Pfeil D) in die zweite Schnittstellung (Winkel β) verdreht, der Materialstrang 6 vorgeschoben, und anschließend das Spaltstück abgetrennt, sobald das Aufnahmeelement 17 wieder in die Aufnahmestellung zurückgekehrt ist. Das nunmehr abgetrennte Spaltstück 23 liegt in einer um 180° verdrehten Lage im Aufnahmeelement 17, wie aus dem unteren Teil der Zeichnung erkennbar. Um nun bei der Übergabe an den Transportteil 3 dieselbe kongruente Lage einzunehmen, die für die weitere Zuführung zur Umformvorrichtung zwingend notwendig ist, erfolgt in diesem Fall eine Verschwenkung des Aufnahmeelementes 17 um 90° in die entgegengesetzte Drehrichtung (Pfeil C'). Die beiden Endstellungen des Aufnahmeelementes 17 differieren um 180°, sodaß die Spaltstücke 23 kongruent sind.

Nach Fig. 6 wird die Überführung der Spaltstücke in kongruente Stellungen dadurch erreicht, daß jedes erste der beiden verdreht anfallenden Spaltstücke in der abgeschnittenen Position von der Transportvorrichtung 14 in unveränderter Lage der Umformvorrichtung zugeführt wird, jedes zweite Spaltstück hingegen während des Transportes in die Übergabestellung (unterer Teil der Zeichnung) um 180° verdreht wird.

### Patentansprüche

1. Einrichtung zur Herstellung von Spaltstücken (23) aus einem zu einer Spaltvorrichtung (1) taktweise vorgeschobenen, erwärmten Rohmaterialstrang (6), die einen Grundkörper (7) mit einem schräg zum Materialstrang (6) ausgerichteten Untermesser (5) und ein an einem vertikal bewegbaren Schneidstempel (2) befestigtes Obermesser (4) aufweist, und an die eine die Spaltstücke (23) aufnehmende und zu einer Umformvorrichtung zuführende Transportvorrichtung (14) anschließt, wobei die Vorschubrichtung des Materialstranges (6) und die Zuführrichtung zur Umformvorrichtung in einer nicht veränderbaren Relation stehen, und wobei die beiden Messer (4, 5) der Spaltvorrichtung (1) im Winkel zur Vorschubrichtung (A) verdrehbar angeordnet sind, dadurch gekennzeichnet, daß die Transportvorrichtung (14) ein in Abhängigkeit von der Winkelverstellung der Messer (4, 5) verdrehbares Aufnahmeelement (17) für die Spaltstücke (23) aufweist, das jedes der Spaltstücke (23) in eine kongruente Zuführlage zur Umformvorrichtung verdreht.

2. Einrichtung nach Anspruch 1, dadurch gekennzeichnet, daß die gesamte Spaltvorrichtung (1) um eine vertikale Achse (24) drehbar ist, die durch die Längsachse des Materialstranges (6) verläuft.

3. Einrichtung nach Anspruch 2, dadurch gekennzeichnet, daß die Spaltvorrichtung (1) auf einen Rundtisch (9) um einen Winkel verdrehbar ist, der zwischen 45° und 150° beträgt.

4. Einrichtung nach Anspruch 3, dadurch gekennzeichnet, daß im Rundtisch (9) kreisbogenförmige Schlitze (10) vorgesehen sind, die der Spaltvorrichtung (1) zugehörige Führungs- und/oder Befestigungselemente (12) hintergreifen.

5. Einrichtung nach Anspruch 1, dadurch gekennzeichnet, daß das Aufnahmeelement (17) der Transportvorrichtung (14) an einem Tragarm (15) um eine vertikale Achse (21) drehbar gelagert ist, wobei der Tragarm (15) zwischen der Aufnahmestellung des Aufnahmeelementes (17) und einer Übergabestellung horizontal bewegbar ist, in der jedes Spaltstück (23) sich im Aufnahmeelement (17) in der Zuführlage zur Umformvorrichtung befindet.

6. Einrichtung nach Anspruch 5, dadurch gekennzeichnet, daß der Tragarm (15) um eine zur Zuführrichtung (B) der Spaltstücke (23) zur Umformvorrichtung senkrechte, vertikale Achse (22) zwischen der Aufnahmestellung und der Übergabestellung des Aufnahmeelementes (17) verschwenkbar ist.

7. Einrichtung nach Anspruch 1 oder 5, dadurch gekennzeichnet, daß das drehbare Aufnahmeelement (17) in der Übergabestellung durch Federbeaufschlagung in einer Mittellage gehalten ist, in der es mit einem sich in der Zuführrichtung (B) zur Umformvorrichtung erstreckenden Transportteil (3) fluchtet.

8. Einrichtung nach Anspruch 1 oder 5, dadurch gekennzeichnet, daß das Aufnahmeelement (17) in der Aufnahmestellung in einer Mittellage gehalten ist, in der es mit der Vorschubrichtung (A) fluchtet, und zwischen der Aufnahme und der Übergabe jedes Spaltstückes (23) alternierend nach links oder rechts verdrehbar ist, wobei die beiden Endstellungen um 180° differieren.

9. Einrichtung nach Anspruch 1 oder 5, dadurch gekennzeichnet, daß die Vorschubrichtung (A) und die Zuführrichtung (B) parallel verlaufen, und das Aufnahmeelement (17) zwischen der Aufnahme und der Übergabe jedes zweiten Spaltstückes (23) um 180° verdrehbar ist.

10. Einrichtung nach einem der Ansprüche 1 bis 9, dadurch gekennzeichnet, daß als Aufnahmeelement (17) eine Aufnahmelade vorgesehen ist, und das Untermesser (5) schnittkantenseitig eine Ausnehmung (25) aufweist, in die die Aufnahmelade in der Aufnahmestellung eingeschoben ist.

11. Einrichtung nach Anspruch 5 und 6, dadurch gekennzeichnet, daß die Transportvorrichtung (14) eine sich in Zuführrichtung (B) erstreckende Zuführrinne (18) aufweist, wobei die Aufnahmelade in der Übergabestellung mit der Zuführrinne (18) fluchtet.

## Claims

1. Apparatus for producing cut pieces (23) from a heated raw material billet (6) which is advanced in steps towards a cutting device (1) which comprises a base (7) carrying a lower blade (5) at an angle to the material web (6) and a vertically movable punch (2) carrying an upper blade (4), and which device is associated with a transport device (14) which carries the cut pieces (23) and feeds them into a deforming device, wherein the direction of advance of the material billet (6) and the direction of feeding to the deforming device are in a fixed relationship, and the two blades (4, 5) of the cutting device (1) are set at an angle to the direction of advance (A) and can be rotated, characterised in that the transport device (14) includes a receiving element (17) for the cut pieces (23) which receiving element can be rotated in dependence to the angular adjustment of the blades (4, 5) to orientate each of the cut pieces (23) into a feed position congruent with the deforming device.

2. Apparatus according to claim 1 characterised in that the complete cutting device (1) can be rotated about a vertical axis (24) which passes through the longitudinal axis of the material billet (6).

3. Apparatus according to claim 2 characterised in that the cutting device (1) can be rotated on a turntable (9) by an angle of between 45° and 150°.

4. Apparatus according to claim 3 characterised in that there are provided in the turntable (9) circular slots (10), behind which engage guiding and/or fixing elements (12) belonging to the cutting device (1).

5. Apparatus according to claim 1 characterised in that the receiving element (17) of the transport device (14) is positioned on a supporting arm (15) so that it can be rotated about a vertical axis (21), the supporting arm (15) being movable horizontally between the position where the receiving element (17) receives and a transfer point in which each cut piece (23) is located in the receiving element (17) in the position for feeding to the deforming device.

6. Apparatus according to claim 5 characterised in that the supporting arm (15) can be swung between the receiving position and the transfer position of the receiving element (17) about a vertical axis (22) perpendicular to the direction of feed (B) of the cut pieces (23) to the deforming device.

7. Apparatus according to claim 1 or 5 characterised in that the rotatable receiving element (17) in the transfer position is held by being springloaded in a central position in which it is aligned with a transport piece (3) which extends in the direction of feed (B) to the deforming device.

8. Apparatus according to claim 1 or 5 characterised in that the receiving element (17) in the receiving position is held in a central position in which it is aligned with the direction of advance (A) and can be rotated alternately to the left or right between the reception and the transfer of each cut piece (23), the two end positions differing by 180°.

9. Apparatus according to claim 1 or 5 characterised in that the direction of advance (A) and the direction of feed (B) run parallel and the receiving element (17) can be rotated by 180° between receiving and transferring every second cut piece (23).

10. Apparatus according to one of claims 1 to 9 characterised in that a drawer-shaped receptacle is provided as the receiving element and the lower blade (5) has a recess (25) on the cutting edge side into which the receptacle is inserted in the receiving position.

11. Apparatus according to claims 5 and 6 characterised in that the transport device (14) possesses a feed channel (18) which extends in the direction of feed (B), the receptacle being aligned with the feed channel (18) in the transfer position.

## Revendications

1. Dispositif pour former des ébauches découpées (23) à partir d'une barre de matière première (6) chauffée, avancée de façon cadencée jusqu'à un dispositif de découpage (1), qui comporte un corps de base (7) possédant un couteau inférieur (5) disposé obliquement par rapport à la barre (6), et un couteau supérieur (4) fixé sur un poinçon de coupe (2) déplaçable verticalement, et auquel se raccorde un dispositif d'entraînement (14) recevant les ébauches découpées (23) et les envoyant à un dispositif de formage, la direction d'avance de la barre de matière (6) et la direction d'envoi au dispositif de formage étant entre elles dans une relation non modifiable, et dans lequel les deux couteaux (4, 5) du dispositif de découpage (1) sont disposés de manière à pouvoir être pivotés par rapport à la direction d'avance (A), caractérisé en ce que le dispositif d'entraînement (14) possède un élément récepteur (17) pouvant pivoter en fonction de la position angulaire des couteaux (4, 5) et apte à recevoir les ébauches découpées (23) et faisant pivoter chacune des ébauches découpées (23) pour l'amener dans une position congruente d'amenée au dispositif de formage.

2. Dispositif selon la revendication 1, caractérisé en ce que l'ensemble du dispositif de découpage (1) peut pivoter autour d'un axe vertical (24), qui recoupe l'axe longitudinal de la barre de matière (6).

3. Dispositif selon la revendication 2, caractérisé en ce que le dispositif de découpage (1) peut être entraîné en rotation, sur un plateau circulaire (9), sur un angle compris entre 45° et 150°.

4. Dispositif selon la revendication 3, caractérisé en ce qu'il est prévu, dans le plateau circulaire (9), des fentes en forme d'arcs de cercle (10), dans lesquelles s'engagent des organes de guidage et/ou de fixation (12) associés au dispositif de découpage (1).

5. Dispositif selon la revendication 1, caractérisé en ce que l'élément récepteur (17) du dispositif de transport (14) est monté sur un bras de support (15) de manière à pouvoir tourner autour d'un axe vertical (21), le bras de support (15) étant déplaçable entre la position de réception de l'élément récepteur (17) et une position de transfert, dans laquelle chaque ébauche découpée (23) est située dans l'élément récepteur (17) dans la position d'amenée au dispositif de formage.

6. Dispositif selon la revendication 5, caractérisé en ce que le bras de support (15) peut pivoter autour d'un axe vertical (22) perpendiculaire à la direction d'amenée (B) des ébauches découpées (23) au dispositif de formage, entre la position de réception et la position de transfert de l'élément récepteur (17).

7. Dispositif selon la revendication 1 ou 5, caractérisé en ce que l'élément récepteur rotatif (17) dans la position de transfert est maintenu, par l'action de ressorts, dans une position centrale, dans laquelle il est aligné avec un élément de transport (3) qui s'étend dans la direction (B) d'amenée au dispositif de formage.

8. Dispositif selon la revendication 1 ou 5, caractérisé en ce que l'élément récepteur (17) situé dans la position de réception est maintenu dans une position centrale, dans laquelle il est aligné avec le dispositif d'avance (A) et peut être entraîné en rotation en alternance vers la gauche ou vers la droite entre la réception et le transfert de chaque ébauche découpée (23), les deux positions extrêmes différant de 180°.

9. Dispositif selon la revendication 1 ou 5, caractérisé en ce que la direction d'avance (A) et la direction d'amenée (B) sont parallèles et que l'élément récepteur (17) peut être pivoté de 180° entre la réception et le transfert de chaque seconde ébauche découpée (23).

10. Dispositif selon l'une des revendications 1 à 9, caractérisé en ce qu'il est prévu un tiroir récepteur en tant qu'élément récepteur (17), et que le couteau inférieur (5) possède, du côté de l'arête de coupe, un évidement (25) dans lequel le tiroir récepteur est inséré dans la position de réception.

11. Dispositif selon les revendications 5 et 6, caractérisé en ce que le dispositif d'entraînement (14) comporte une gouttière d'amenée (18) qui s'étend dans la direction d'amenée (B), le tiroir récepteur étant aligné, dans la position de transfert, avec la gouttière d'amenée (18).

Fig. 1

0 123 821

Fig. 2

A  1  5  6  7  8  9  10  12  13  14  16  17  18  19  20  22  23  27  28  3

Fig. 3

0 123 821

Fig. 4

0 123 821

Fig. 5

0 123 821

Fig. 6

0 123 821